**Europäisches Patentamt**

**European Patent Office**

**Office européen des brevets**

(19)

(11) Veröffentlichungsnummer: **0 137 232 B1**

(12) **EUROPÄISCHE PATENTSCHRIFT**

(45) Veröffentlichungstag der Patentschrift:
13.05.87

(51) Int. Cl.⁴: **G 11 B 5/62,** H 01 F 1/08, B 22 F 1/00

(21) Anmeldenummer: **84109741.3**

(22) Anmeldetag: **16.08.84**

(54) Handhabungsstabile im wesentlichen aus Eisen bestehende Magnetpigmente, Verfahren zu ihrer Herstellung sowie ihre Verwendung.

(30) Priorität: **26.08.83 DE 3330767**

(43) Veröffentlichungstag der Anmeldung:
**17.04.85 Patentblatt 85/16**

(45) Bekanntmachung des Hinweises auf die Patenterteilung:
**13.05.87 Patentblatt 87/20**

(84) Benannte Vertragsstaaten:
**DE FR GB IT NL**

(56) Entgegenhaltungen:
**EP - A - 0 054 818**
**CH - A - 602 933**
**DE - A - 1 914 137**
**US - A - 3 959 032**
**US - A - 4 076 890**

(73) Patentinhaber: **BAYER AG, Konzernverwaltung RP Patentabteilung, D-5090 Leverkusen 1 Bayerwerk (DE)**

(72) Erfinder: **Naumann, Rolf, Dr., Scheiblerstrasse 89, D-4150 Krefeld-Bochum (DE)**
Erfinder: **Rademachers, Jakob, Dr., Hoeninghausstrasse 34, D-4150 Krefeld (DE)**
Erfinder: **Buxbaum, Gunter, Dr., Holzapfelweg 2, D-4150 Krefeld-Traar (DE)**
Erfinder: **Rodi, Fritz, Dr., Schwarzer Weg 41, D-4130 Moers 1 (DE)**
Erfinder: **Waid, Karl, Dr., Spihwegstrasse 37, D-5303 Bornheim 4 (DE)**

**Beschreibung**

Die vorliegende Erfindung betrifft zur Konservierung ihrer Eigenschaften in Polymermaterialien eingeschlossene Magnetpigmente, Verfahren zu ihrer Herstellung sowie ihre Verwendung zur Herstellung von magnetischen Informationsträgern.

Die Suche nach verbesserten magnetischen Aufzeichnungsmedien führte in den letzten Jahren zur Verwendung von magnetischen Metallpigmenten, die zur Entfaltung überragender Aufzeichnungseigenschaften von extremer Feinteiligkeit sein müssen. Derart feinteilige Metalle neigen jedoch an Luft zur spontanen Selbstentzündung und nach der Einarbeitung in Lackbindemitteln in magnetischen Trägermaterialien zur Korrosion.

Auch magnetische Pigmente auf Eisenoxidbasis weisen eine Neigung zur Autoxidation auf, wenn das Eisen nicht in der höchsten Oxidationsstufe vorliegt, wie es bei Magnetiten oder bertholoiden Eisenoxiden der Fall ist.

Es wurden daher verschiedene Wege vorgeschlagen, diese Magnetpigmente zu stabilisieren und sie dem Anwender in einer handhabungsstabilen Form anzubieten.

Dies kann geschehen durch vorsichtige Anoxidation des Produktes in trockener Phase (DE-A 3116489, DE-A 2028536) oder in Suspensionen (US-A 3520676), durch Nachbehandlung der Pigmente mit anorganischen (DE-A 3124430) und/oder organischen Substanzen (JA-A 54082324, JA-A 78076958), durch Verwendung von Metallsuspensionen in organischen Lösungsmitteln, durch den Einsatz von sogenannten «Masterbatchen» oder durch Kombination der einzelnen Massnahmen.

Weiterhin sind aus der DE-A 1914137 kunststoffbeschichtete Magnetpulver zur Herstellung von Dauermagneten bekannt.

Aus der EP-A 54818 sind staubarme Magnetpigmente bekannt, wobei die Primärteilchen eine Beschichtung aus Polymeren aufweisen.

Alle diese Methoden sind mit Nachteilen behaftet. Entweder ist die Stabilität der Produkte gering, so dass beim Verarbeiten des Materials in organischen Medien eine hohe Gefährdung infolge Selbstentzündung besteht, oder es wird durch notwendige hohe Nachbehandlungsmengen die magnetische Substanz zu stark verdünnt, die Rezepturauswahl der Verarbeiter stark eingeschränkt oder durch die Vielfalt notwendiger Masterbatchrezepturen eine wirtschaftliche Fertigung erschwert.

Ziel der vorliegenden Erfindung ist es, handhabungssichere Magnetpigmente in optimaler magnetischer und korrosionsstabiler Form bereitzustellen.

Alle diese Forderungen werden erfüllt, durch zur Konservierung ihrer Eigenschaften in Polymermaterialien eingeschlossene empfindliche Magnetpigmente, die dadurch gekennzeichnet sind, dass die Polymermaterialien als Verpackung dienen, ihre Menge, bezogen auf die Menge der Magnetpigmente 0,1 bis 5 Gewichtsprozent, bevorzugt 0,2 bis 2 Gewichtsprozent, beträgt und die Polymermaterialien in den zur Herstellung magnetischer Aufzeichnungsmedien verwendeten Zubereitungen löslich und/oder quellbar sind.

Derartig verpackte Magnetpigmente weisen im Gegensatz zu einem Masterbatch, bei dem jedes Teilchen umhüllt wird, den Vorteil auf, dass weitaus weniger Umhüllungsmaterial benötigt wird. Dieser Anteil liegt bei Masterbatchen zwischen 10 und 30 Gew.-%.

Das Polymermaterial der Verpackung sollte sich schnell und vollständig im Magnetlack lösen und/oder quellbar sein, ohne negativ in die Pigment-Bindemittel-Wechselwirkung einzugreifen. Es muss daher ein Polymer oder Copolymer sein, welches sowohl als Verpackungsmaterial gute mechanische Eigenschaften aufweist als auch bei guter Löslichkeit oder Quellbarkeit im Lack die Wirkung der üblichen Bindemittel nicht beeinträchtigt.

Hierzu eignen sich in erster Linie Polymermaterialien aus Polymeren oder Mischpolymeren aus der Gruppe der Polycarbonate, Polyacrylate, Polymethacrylate, Polyester, Polyether, Polyurethane, Polyvinylverbindungen, Polyvinylidenverbindungen, Celluloseverbindungen. Aber auch andere Polymere oder Mischpolymerisate sind denkbar. Dagegen sind Polyethylen, Polypropylen oder Polystyrol bei Verwendung üblicher organischer Bindemittel ungeeignet.

Magnetpigmente im Sinne dieser Erfindung sind alle magnetischen Pigmente auf der Basis von Metallen und Metalloxiden. Besonders bevorzugt sind aber Magnetite, bertholoide Eisenoxide und/oder im wesentlichen aus Eisen bestehende Metallpigmente.

Im Falle der im wesentlichen aus Eisen bestehenden Magnetpigmente empfiehlt es sich, dass diese einen Sauerstoffgehalt von 0,5 bis 15 Gewichtsprozent, bezogen auf das Magnetpigment, aufweisen.

Solche Metallteilchen können dadurch erhalten werden, dass die an Luft instabilen Metallteilchen durch schonende thermische Behandlung in einer Atmosphäre mit zeitlich ansteigendem Sauerstoffpartialdruck auf einen Sauerstoffgehalt von 0,5 bis 15% gebracht werden.

Es hat sich gezeigt, dass eine Stabilisierung der Metallpigmente durch Anoxidation nur dann zu gut handhabbaren Materialien führt, wenn die Pigmente durch Kunststoffverpackungen dicht versiegelt werden. Unter optimalen Produkteigenschaften seien sowohl die Korrosionsstabilität bei der Lagerung oder nach der Einarbeitung im Lackbindemittel als auch der Erhalt der magnetischen Daten bis zum fertigen magnetischen Informationsträger verstanden.

Gegenstand der vorliegenden Erfindung ist auch das Verfahren zur Herstellung der erfindungsgemässen Magnetpigmente. Es geschieht dadurch, dass die Magnetpigmente nach einer gegebenenfalls erfolgten Einstellung des Oxidationsgrades in das Polymermaterial eingeschlossen werden.

Das erfindungsgemässe Verfahren ist selbstverständlich anwendbar auf alle Arten von Magnetpigmenten, seien sie im hochpyrophoren Zustand, durch Anoxidation oder durch Nachbehandlung oder durch eine Kombination dieser Massnahmen stabilisiert.

Besonders bevorzugt ist dieses Verfahren zur Konservierung der Produkteigenschaften von im wesentlichen aus Eisen bestehenden Magnetpigmenten, wobei diese durch schonende thermische Behandlung in einer Atmosphäre mit zeitlich ansteigen- dem Sauerstoffpartialdruck auf einen Sauerstoffge- halt von 0,5 bis 15 Gewichtsprozent gebracht und anschliessend von Polymeren als Verpackungsmaterial in Höhe von 0,1 bis 5 Gewichtsprozent umgeben werden, die aus Verbindungen der Gruppe der Poly- carbonate, Polyacrylate, Polymethacrylate, Poly- ether, Polyurethane, Polyvinylverbindungen, Poly- vinylidenverbindungen, Celluloseverbindungen oder deren Gemische bestehen.

Ein besonderer Vorteil dieses Verfahrens besteht in der Konservierung guter Produkteigenschaften. Während bei Lagerung von stabilisiertem Produkt in Metallbehältern bisher eine langsame Abnahme des Metallgehaltes der Proben beobachtet wurde, trat ein derartiger Effekt bei Lagerung in versiegelten Folienbehältnissen selbst an hochpyrophorem un- stabilisiertem Produkt nicht auf.

Die erfindungsgemässen Produkte eignen sich hervorragend zur Herstellung von magnetischen Informationsträgern.

Die Vorteile der Erfindung sollen anhand folgender Beispiele aufgezeigt werden.

### Vergleichsbeispiel 1

Von einem Metallpigment wurden durch Anoxidation Produkte mit verschiedenen Sauerstoffgehalten hergestellt und in Magnetbänder eingearbeitet. Bandstücke davon wurden einem einwöchigen Kli- matest unterworfen (60°C; 92,5 + 5% relative Luftfeuchte) und die Abnahme der Bandremanenz dabei, der Remanenzverlust, als Mass für die Korrosionsempfindlichkeit des Pigments im Magnetlack bestimmt (Tabelle 1).

### Beispiel 1

Es wurde eine grössere Menge Metallpigment mit einer spezifischen Oberfläche nach BET von 35 m²/g durch vorsichtige Anoxidation im Wirbelbett inner- halb von 15 Stunden auf einen Sauerstoffgehalt von 13% gebracht, so dass gute Korrosionseigenschaften und gute magnetische Eigenschaften erhalten wurden. Teilmengen der Probe wurden in verschie- dene Folienmaterialien eingeschweisst und zusam- men mit einer unstabilisierten Ausgangsprobe sowie dem unverpackten unstabilisierten Material in Magnetlackansätzen verarbeitet. Für die Folienverpackung war jeweils ein Gewichtsprozent Folie bezogen auf Pigment notwendig. Die Verarbeitung der unstabilisierten Probe sowie der unstabilisierten Probe ohne Verpackung musste unter erheblichen Sicherheitsvorkehrungen durchgeführt werden. Die Abprüfergebnisse der fertigen Magnetbänder sind in Tabelle 2 aufgeführt.

Die verwendeten Folienmaterialien sind wie folgt spezifiziert:
Polycarbonat: hergestellt auf Basis von 2,2-(4,4-Dihydroxydiphenyl)-propan mit einem mittleren Mo- lekulargewicht von 28 000
Polymethylmethacrylat: Waloplast PMMA-Folie der Firma Wolff Walsrode AG
Polyester-Polyurethan: Waloplast PUR 212-Folie der Firma Wolff Walsrode AG
Polyether-Polyurethan: Waloplast PUR 214-Folie der Firma Wolff Walsrode AG.

### Tabelle 1

| Probe | O-Gehalt % | Magnetwerte des Pigments $B_R/\sigma$ [nTm³/g] | $4\pi ls/\sigma$ [nTm³/g] | Remanenzverlust % | Pigmentzustand |
|---|---|---|---|---|---|
| A | 2 | 117 | 196,5 | 22,9 | spontan pyrophor |
| B | 10 | 95,4 | 150,4 | 11,5 | noch nicht handhabungsstabil |
| C | 15 | 72,5 | 116,5 | 7,0 | handhabungsstabil |

Gemessen in einem Feld von 278 kA/m

### Tabelle 2

| Anoxidation | Folienmaterial | Magnetische Messungen Koerzitivkraft [kA/m] | Ausrichtbarkeit Br/Bs | Klimatest $R_v$ |
|---|---|---|---|---|
| keine | — | 114 | 0,84 | 23,2 |
| ja | — | 122 | 0,84 | 6,7 |
| » | Polycarbonat | 122 | 0,84 | 6,7 |
| » | Polymethylmethacrylat | 122 | 0,85 | 6,6 |
| » | Polyester-Polyurethan | 123 | 0,85 | 7,1 |
| » | Polyether-Polyurethan | 122 | 0,82 | 6,7 |

$R_v$: klimatisch bedingter Remanenzverlust in % nach einwöchiger Bewitterung des Magnetbandes bei 60°C und > 90% relative Feuchte

Messungen der magnetischen Daten in einem Feld von 278 kA/m

## Patentansprüche

1. Zur Konservierung ihrer Eigenschaften in Polymermaterialien eingeschlossene empfindliche Magnetpigmente, dadurch gekennzeichnet, dass die Polymermaterialien als Verpackung dienen, ihre Menge, bezogen auf die Menge der Magnetpigmente 0,1 bis 5 Gewichtsprozent, bevorzugt 0,2 bis 2 Gewichtsprozent, beträgt, und die Polymermaterialien in den Zubereitungen zur Herstellung magnetischer Aufzeichnungsmedien löslich und/oder quellbar sind.

2. Magnetpigmente gemäss Anspruch 1, dadurch gekennzeichnet, dass die Polymermaterialien aus Verbindungen aus der Gruppe der Polycarbonate, Polyacrylate, Polymethacrylate, Polyester, Polyether, Polyurethane, Polyvinylverbindungen, Polyvinylidenverbindungen, Celluloseverbindungen oder deren Gemische bestehen.

3. Magnetpigmente gemäss einem der Ansprüche 1 oder 2, dadurch gekennzeichnet, dass die Pigmente Magnetite, bertholoide Eisenoxide und/oder im wesentlichen aus Eisen bestehende Metallpigmente sind.

4. Magnetpigmente gemäss Anspruch 3, dadurch gekennzeichnet, dass die Magnetpigmente im wesentlichen aus Eisen bestehende Metallpigmente mit einem Sauerstoffgehalt von 0,5 bis 15 Gewichtsprozent sind.

5. Verfahren zur Herstellung der Metallpigmente gemäss der Ansprüche 1 bis 4, dadurch gekennzeichnet, dass die Magnetpigmente nach einer gegebenenfalls erfolgten Einstellung ihres Oxidationsgrades in das Polymermaterial als Verpackungsmaterial eingeschlossen werden.

6. Verfahren zur Herstellung der Magnetpigmente gemäss Anspruch 4, dadurch gekennzeichnet, dass im wesentlichen aus Eisen bestehende Metallpigmente durch schonende thermische Behandlung in einer Atmosphäre mit zeitlich ansteigendem Sauerstoffpartialdruck auf einen Sauerstoffgehalt von 0,5 bis 15 Gewichtsprozent gebracht und anschliessend von Polymeren als Verpackungsmaterial in Höhe von 0,1 bis 5 Gewichtsprozent umgeben werden, die aus Verbindungen aus der Gruppe der Polycarbonate, Polyacrylate, Polymethacrylate, Polyester, Polyether, Polyurethane, Polyvinylverbindungen, Polyvinylidenverbindungen, Celluloseverbindungen oder deren Gemische bestehen.

7. Verwendung der Magnetpigmente gemäss Anspruch 1 bis 6 zur Herstellung von magnetischen Informationsträgern.

## Claims

1. Sensitive magnetic pigments which are enclosed in polymer materials to preserve their properties, characterised in that the polymer materials serve as a packing, their quantity, based on the quantity of the magnetic pigments, is 0.1 to 5 per cent by weight, preferably 0.2 to 2 per cent by weight, and the polymer materials are soluble and/or capable of swelling in the preparations for the production of magnetic recording media.

2. Magnetic pigments according to Claim 1, characterised in that the polymer materials consist of compounds from the group comprising polycarbonates, polyacrylates, polymethacrylates, polyesters, polyethers, polyurethanes, polyvinyl compounds, polyvinylidene compounds, cellulose compounds and mixtures thereof.

3. Magnetic pigments according to one of Claims 1 or 2, characterised in that the pigments are magnetites, bertholoid iron oxides and/or metal pigments substantially consisting of iron.

4. Magnetic pigments according to Claim 3, characterised in that the magnetic pigments are metal pigments which substantially consist of iron and have an oxygen content of 0.5 to 15 per cent by weight.

5. Process for the production of the metal pigments according to Claims 1 to 4, characterised in that the magnetic pigments are enclosed in the polymer material as packing material, if appropriate after their degree of oxidation has been adjusted.

6. Process for the production of the magnetic pigments according to Claim 4, characterised in that metal pigments substantially consisting of iron are brought to an oxygen content of 0.5 to 15 per cent by weight by careful thermal treatment in an atmosphere having an oxygen partial pressure which increases with time, and are then surrounded by polymers as packing material in a quantity of 0.1 to 5 per cent by weight, which polymers consist of compounds from the group comprising polycarbonates, polyacrylates, polymethacrylates, polyesters, polyethers, polyurethanes, polyvinyl compounds, polyvinylidene compounds, cellulose compounds and mixtures thereof.

7. Use of the magnetic pigments according to Claim 1 to 6, for the production of magnetic information carriers.

## Revendications

1. Pigments magnétiques sensibles, incorporés dans des matières polymériques pour la conservation de leurs propriétés, caractérisés en ce que les matières polymériques servent d'emballage, leur quantité, par rapport à la quantité de pigments magnétiques, va de 0,1 à 5% en poids, de préférence de 0,2 à 2% en poids, et les matières polymériques sont solubles et/ou peuvent gonfler dans les préparations pour la réalisation de milieux magnétiques d'enregistrement.

2. Pigments magnétiques suivant la revendication 1, caractérisés en ce que les matières polymériques sont constituées de composés du groupe des polycarbonates, polyacrylates, polyméthacrylates, polyesters, polyéthers, polyuréthannes, composés polyvinyliques, composés polyvinylidéniques, composés cellulosiques ou leurs mélanges.

3. Pigments magnétiques suivant l'une des revendications 1 et 2, caractérisés en ce qu'ils sont des magnétites, des oxydes de fer du type bertholide et/ou des pigments métalliques principalement formés de fer.

4. Pigments magnétiques suivant la revendication 3, caractérisés en ce qu'ils sont des pigments métalliques principalements constitués de fer ayant une teneur en oxygène de 0,5 à 15% en poids.

5. Procédé de production des pigments métalliques suivant les revendications 1 à 4, caractérisé en ce que les pigments magnétiques sont incorporés à la matière polymérique comme matière d'emballage, après avoir éventuellement effectué un réglage de leur degré d'oxydation.

6. Procédé de production des pigments magnétiques suivant la revendication 4, caractérisé en ce qu'on porte à une teneur en oxygène de 0,5 à 15% en poids des pigments métalliques principalement constitués de fer par un traitement thermique conduit avec ménagement dans une atmosphère à pression partielle d'oxygène croissant avec le temps, puis on les entoure de polymères comme matière d'emballage en proportion de 0,1 à 5% en poids, qui consistent en composés du groupe des polycarbonates, polyacrylates, polyméthacrylates, polyesters, polyéthers, polyuréthannes, composés polyvinyliques, composés polyvinylidéniques, composés cellulosiques ou leurs mélanges.

7. Utilisation des pigments magnétiques suivant les revendications 1 à 6 pour la production de supports magnétiques d'informations.